# EUROPEAN PATENT APPLICATION

(11) **EP 4 068 555 A1**
(43) Date of publication of application: **05.10.2022**
(21) Application number: 20893047.9
(22) Date of filing: 26.11.2020
(51) Int. Cl.: H02J 7/00

(54) **MULTIPLE-BATTERY SWITCHING CONTROL CIRCUIT, APPARATUS AND SYSTEM, AND CONTROL METHOD**

(30) Priority: 26.11.2019 CN 201911177146
(71) Applicant: ZTE Corporation, Shenzhen, Guangdong 518057 (CN)
(72) Inventor: LI, Lin, Shenzhen, Guangdong 518057 (CN); WANG, Fangchun, Shenzhen, Guangdong 518057 (CN); ZHANG, Zhe, Shenzhen, Guangdong 518057 (CN); WU, Yaju, Shenzhen, Guangdong 518057 (CN); YANG, Rui, Shenzhen, Guangdong 518057 (CN); FENG, Fujian, Shenzhen, Guangdong 518057 (CN)
(74) Representative: Aipex B.V.
(86) International application number: PCT/CN2020/131774
(87) International publication number: WO 2021/104373

(57) **Abstract**

Disclosed are a multiple-battery switching control circuit, apparatus and system, and a control method. A switching control circuit is designed, and the switching control circuit comprises: a first-stage circuit, a second-stage circuit, and a third-stage circuit, which are sequentially connected in parallel, wherein the first-stage circuit comprises a first switch element and a second switch element; the second-stage circuit comprises an inductor and a fourth switch element; and the third-stage circuit comprises a third switch element and a battery unit.

## Description

This application claims priority to Chinese Patent Application No. 201911177146.2 filed with the China National Intellectual Property Administration (CNIPA) on Nov. 26, 2019, the disclosure of which is incorporated herein by reference in its entirety.

### TECHNICAL FIELD

Embodiments of the present application relate to, but are not limited to, the field of power supply technology of communication devices, for example, a multiple-battery switching control circuit, apparatus and system and a multiple-battery switching control method.

### BACKGROUND

In recent years, lithium batteries in the field of communication power supplies have developed rapidly, and old communication power supplies are mostly lead-acid batteries. To save a cost, an operator desires to utilize an old lead-acid battery and the characteristic of a long cycle life of a lithium battery at the same time, direct connecting the lead-acid battery and the lithium battery in parallel and gradually replacing the lead-acid battery with the lithium battery. Due to a limitation of a volume of the operator's original cabinet, the operator does not desire to add an additional battery switching unit device.

The lithium battery and the lead-acid battery have inconsistent charge characteristics, discharge characteristics and cycle lives. In view of the inconsistent characteristics of the lithium battery and the lead-acid battery, multiple operation cases often exist when the lithium battery and the lead-acid battery are mixed in use.

At an early stage, to satisfy the connection of the lead-acid battery and the lithium battery in parallel, a hybrid battery switching unit is mainly used in a communication power supply or the lead-acid battery and the lithium battery are charged and discharged at the same time.

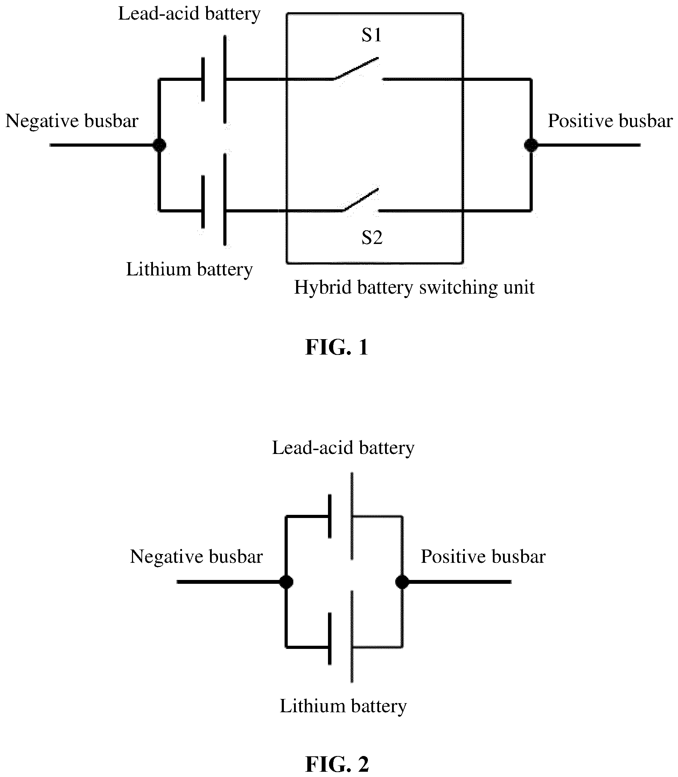

FIG. 1 is a block diagram of the hybrid battery switching unit. The hybrid battery switching unit mainly switches the states of the lithium battery and the lead-acid battery in a loop by closing or opening S1 and S2.

The hybrid battery switching unit in FIG. 1 has the disadvantages below.
(1) During charging, S2 is preferentially closed so that the lithium battery can be preferentially charged. S1 and S2 are closed at the same time so that the lithium battery and the lead-acid battery can be charged at the same time. When S1 and S2 are closed and the loop enters a busbar, a system controls a charge current of the lead-acid battery, and the lithium battery can be charged only at a voltage of the busbar and its charge current cannot be intelligently selected. Therefore, the lithium battery and the lead-acid battery cannot be charged proportionally according to a capacity of a station.
(2) During discharging, in the case where S2 is closed and S1 is open, the lithium battery can be preferentially discharged. In the case where S2 is open and S1 is closed, the lead-acid battery can be preferentially discharged. At the end of the discharging, since the lithium battery and the lead-acid battery have inconsistent voltages, charge curves and discharge curves, the lithium battery and the lead-acid battery cannot be discharged at the same time.

In the case where both S1 and S2 are open or closed, if the lead-acid battery and the lithium battery have inconsistent discharge voltages, the lead-acid battery and the lithium battery may impact each other when both S1 and S2 are closed. If S1 and S2 are switched in sequence, the station may be disconnected.

As shown in FIG. 2, the lead-acid battery and the lithium battery are directly connected in parallel to be charged and discharged in the related art. The lithium battery and the lead-acid battery have inconsistent charge coefficients, discharge coefficients, charge modes, discharge modes, cycle lives and the like. The lead-acid battery and the lithium battery are directly connected in parallel to simply supply power at the same time and be charged at the same time instead of being reasonably used. A circulating current exists between the lithium battery and the lead-acid battery, which damages both the lead-acid battery and the lithium battery.

Therefore, the present application provides a multiple-battery switching control circuit, apparatus and system and a multiple-battery switching control method, which are very significant for controlling the input and output characteristics of a newly added battery to satisfy a requirement of a communication device for power consumption, improve the stability and reliability of power supply for the communication device and reduce a modification cost.

### SUMMARY

Embodiments of the present application provide a multiple-battery switching control circuit, apparatus and system and a multiple-battery switching control method, which avoid the case where to satisfy an increasing requirement for power consumption, a newly added battery pack and an old battery pack in a current communication device are different in performance, resulting in a significant decrease in the stability and reliability of input characteristics and output characteristics of a power supply.

In a first aspect, embodiments of the present application provide a switching control circuit. The switching control circuit includes a first-stage circuit, a second-stage circuit and a third-stage circuit, which are sequentially connected in parallel.

The first-stage circuit includes a first switch device and a second switch device, where the first switch device is connected to a positive electrode of a busbar, the second switch device is connected to a negative electrode of the busbar, the first switch device and the second switch device are connected in sequence and are configured in a forward mode, and the forward mode is a configuration mode in which the first switch device and the second switch device function as switches in the case where a potential of the positive electrode of the busbar is higher than a potential of the negative electrode of the busbar.

The second-stage circuit includes an inductor and a fourth switch device, where the inductor is drawn from between the first switch device and the second switch device, the fourth switch device is connected to the negative electrode of the busbar, the inductor and the fourth switch device are connected in sequence, and the fourth switch device is configured in the forward mode.

The third-stage circuit includes a third switch device and a battery cell, where the third switch device is drawn from between the inductor and the fourth switch device, a negative electrode of the battery cell is connected to the negative electrode of the busbar, the third switch device is connected to a positive electrode of the battery cell, and the third switch device is configured in a reverse mode.

In a second aspect, embodiments of the present application further provide a switching control circuit integration apparatus. The switching control circuit integration apparatus includes at least one switching control circuit, where each of the at least one switching control circuit is the switching control circuit according to the first aspect.

In the case where the number of the switching control circuits is greater than or equal to 2, the switching control circuits are connected in parallel to each other.

In a third aspect, embodiments of the present application further provide a multiple-battery switching control circuit. The multiple-battery switching control circuit includes a first battery cell and the switching control circuit integration apparatus containing at least one battery cell according to the second aspect.

The first battery cell and the switching control circuit integration apparatus are connected in parallel and then connected to a positive electrode and a negative electrode of a busbar in a same-electrode connection manner.

Embodiments of the present application further provide a multiple-battery switching control system. The multiple-battery switching control system includes a communication power supply, a multiple-battery switching control circuit and a load, where the communication power supply is separately connected to the multiple-battery switching control system and the load, and the multiple-battery switching control circuit is connected to the load.

A busbar is connected to the communication power supply in the multiple-battery switching control system, and the communication power supply is configured to control a current and a voltage input by the busbar to the multiple-battery switching control system, control charging and discharging of the multiple-battery switching control circuit and monitor the multiple-battery switching control system.

The multiple-battery switching control circuit is configured to store electrical energy and provide the electrical energy to the load.

Embodiments of the present application further provide a multiple-battery switching control method, which is applied to a multiple-battery switching control system. The multiple-battery switching control system includes a communication power supply, a multiple-battery switching control circuit and a load, where the communication power supply is separately connected to the multiple-battery switching control circuit and the load, and the multiple-battery switching control circuit is connected to the load. The method includes the steps below.

When the communication power supply supplies an alternating current and a busbar outputs a direct current voltage, the communication power supply controls the load to be powered and the multiple-battery switching control circuit to be charged.

When the communication power supply stops supplying the alternating current and the busbar has a voltage dip, the communication power supply controls the multiple-battery switching control circuit to supply power to the load.

### BRIEF DESCRIPTION OF DRAWINGS

FIG. 1 is a structural diagram of a hybrid battery switching unit in the related art.
FIG. 2 is a structural diagram of a lead-acid battery and a lithium battery directly connected in parallel in the related art.
FIG. 3 is a structural diagram of a switching control circuit according to embodiment one of the present application.
FIG. 4 is an equivalent circuit diagram of a buck charging circuit according to embodiment one of the present application.
FIG. 5 is an equivalent circuit diagram of a boost charging circuit according to embodiment one of the present application.
FIG. 6 is an equivalent circuit diagram of a buck power supply circuit according to embodiment one of the present application.
FIG. 7 is an equivalent circuit diagram of a boost power supply circuit according to embodiment one of the present application.
FIG. 8 is an extended structural diagram of a switching control circuit according to embodiment one of the present application.
FIG. 9 is a structural diagram of a switching control circuit integration apparatus according to embodiment two of the present application.
FIG. 10 is a structural diagram of a multiple-battery switching control circuit according to embodiment three of the present application.
FIG. 11 is a structural diagram of a multiple-battery switching control circuit in the case of different polarities of a busbar according to embodiment three of the present application.
FIG. 12 is a diagram showing a multiple-battery switching control system when an external busbar supplies power according to embodiment four of the present application.
FIG. 13 is a diagram showing a multiple-battery switching control system when a battery supplies power according to embodiment four of the present application.
FIG. 14 is a flowchart of a multiple-battery switching control method according to embodiment five of the present application.

### DETAILED DESCRIPTION

With an increasing requirement of a current communication device for power consumption, an original battery cannot satisfy the requirement of a power consumption device for electrical energy. To satisfy the requirement of the communication device for the electrical energy, the battery current used needs to be reconstructed, for example, replaced with a battery with a larger capacity. However, this manner has a high cost and a complicated installation process. Another manner is to connect another battery in parallel to a battery in the related art, and a power consumption gap of the communication device is satisfied by the battery connected in parallel. However, since the original battery and the newly added battery have inconsistent charge characteristics, discharge characteristics and cycle lives, currently the following cases appear for the two batteries with the inconsistent charge characteristics and discharge characteristics when they are mixed in use.
(1) During charging when the two batteries are mixed in use, the charging includes three manners: the newly added battery is preferentially charged, the newly added battery and the original battery are charged at the same time and the newly added battery and the original battery are proportionally charged according to a capacity of a station.
(2) During discharging when the two batteries are mixed in use, the discharging includes four states: the newly added battery is preferentially discharged, the original battery is preferentially discharged, the newly added battery and the original battery are proportionally discharged by use of battery characteristics, and at the end of the discharging, the newly added battery and the original battery are discharged at the same time.
(3) In a 5G application scenario, the voltage of the batteries needs to be boosted for power supply.

### Embodiment one

To satisfy an increasing requirement of a communication device for power supply, the present embodiment provides a switching control circuit. The switching control circuit includes a first-stage circuit, a second-stage circuit and a third-stage circuit, which are sequentially connected in parallel. The first-stage circuit includes a first switch device and a second switch device, where the first switch device is connected to a positive electrode of a busbar, the second switch device is connected to a negative electrode of the busbar, the first switch device and the second switch device are connected in sequence and are configured in a forward mode, and the forward mode is a configuration mode in which the first switch device and the second switch device function as switches in the case where a potential of the positive electrode of the busbar is higher than a potential of the negative electrode of the busbar. The second-stage circuit includes an inductor and a fourth switch device, where the inductor is drawn from between the first switch device and the second switch device, the fourth switch device is connected to the negative electrode of the busbar, the inductor and the fourth switch device are connected in sequence, and the fourth switch device is configured in the forward mode. The third-stage circuit includes a third switch device and a battery cell, where the third switch device is drawn from between the inductor and the fourth switch device, a negative electrode of the battery cell is connected to the negative electrode of the busbar, the third switch device is connected to a positive electrode of the battery cell, and the third switch device is configured in a reverse mode.

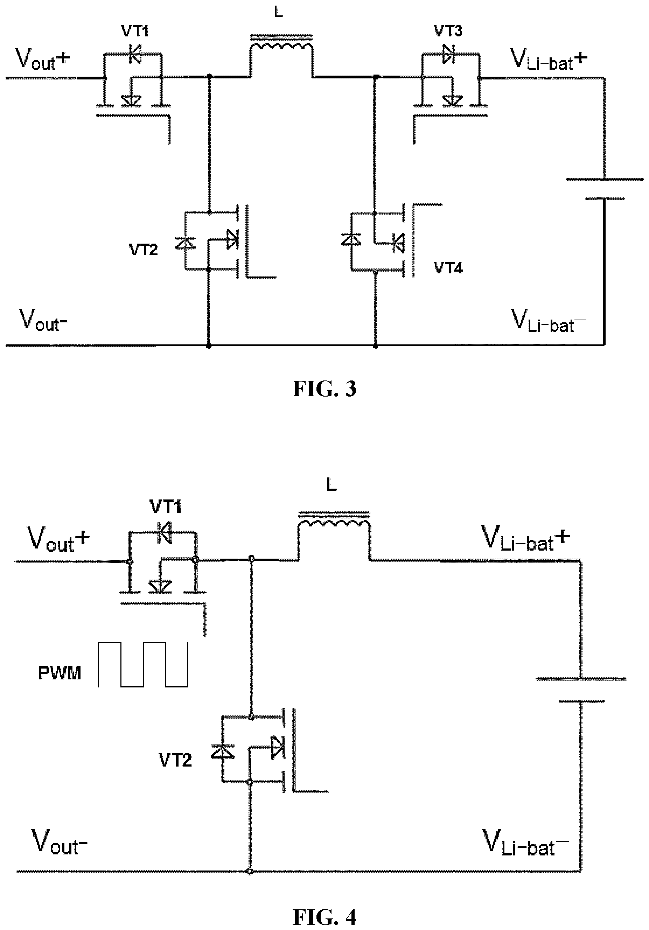

Referring to FIG. 3, FIG. 3 shows the switching control circuit according to the present embodiment. In the switching control circuit, Vₒᵤₜ₊ is the end of the positive electrode of the busbar, Vₒᵤₜ₋ is the end of the negative electrode of the busbar, VT1 is the first switch device, and VT2 is the second switch device. VT1 is connected to the positive electrode of the busbar and then connected to VT2, VT2 is connected to the negative electrode of the busbar, and VT1 and VT2 form the first-stage circuit. L is the inductor, VT4 is the fourth switch device, and L is drawn from between VT1 and VT2 of the first-stage circuit and then connected to VT4. VT4 is connected to the negative electrode of the busbar, and L and VT4 form the second-stage circuit. VT3 is the third switch device, and the battery cell is configured at a rightmost side of the switching control circuit. In the present embodiment, the battery cell includes a lithium battery, VT3 is drawn from between L and VT4 of the second-stage circuit and then connected to a positive electrode of the lithium battery, and a negative electrode of the lithium battery is connected to the negative electrode of the busbar. As shown in FIG. 3, in the present embodiment, VT1, VT2 and VT4 are all configured in a forward mode, and VT3 is configured in a reverse mode. The forward mode is a configuration mode in which the switch device functions as a switch in the case where the potential of the positive electrode of the busbar is higher than the potential of the negative electrode of the busbar.

In the present embodiment, when the battery cell is charged and if a voltage input to the switching control circuit by the busbar is greater than a voltage of the battery cell, the third switch device is turned on, the fourth switch device is not turned on, the first switch device, the second switch device and the inductor form a buck charging circuit, and the buck charging circuit bucks the voltage to charge the battery cell. When the battery cell is charged and if the voltage input to the switching control circuit by the busbar is less than the voltage of the battery cell, the first switch device is turned on, the second switch device is not turned on, the third switch device, the fourth switch device and the inductor constitute a boost charging circuit, and the boost charging circuit boosts the voltage to charge the battery cell.

Two cases exist when the battery cell in the switching control circuit needs to be charged: (1) Vₒᵤₜ> V_{Li}; and (2) Vₒᵤₜ< V_{Li}, where Vₒᵤₜ denotes the voltage of the busbar and V_{Li} denotes the voltage of the lithium battery.

In case (1), VT3 is turned on, VT4 is not turned on, and VT1, VT2 and L form the buck charging circuit. At this time, the voltage input to the switching control circuit by the busbar is bucked, and then the lithium battery is charged. For an equivalent circuit diagram, reference may be made to FIG. 4.

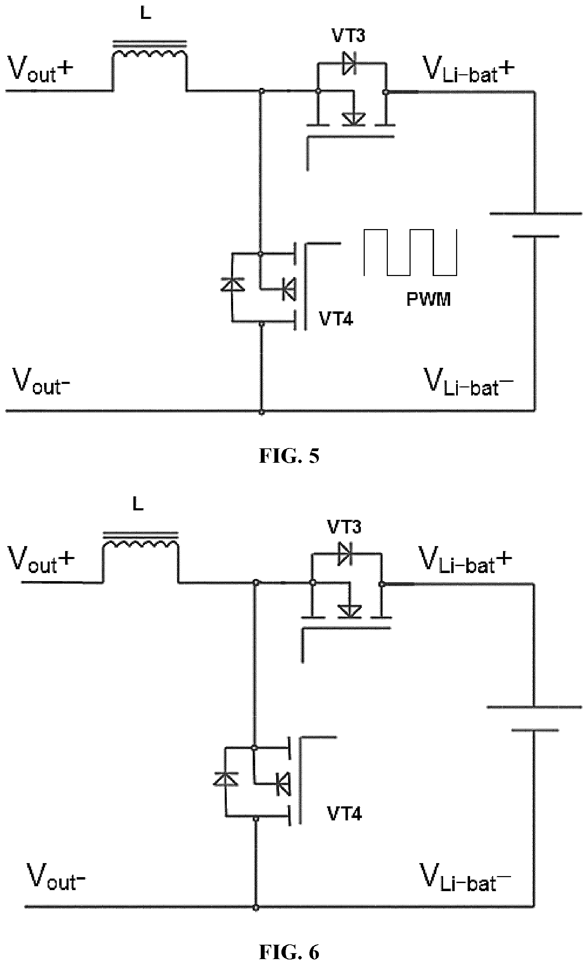

In case (2), VT1 is turned on, VT2 is not turned on, and L, VT3 and VT4 form the boost charging circuit. At this time, the voltage input to the switching control circuit by the busbar is boosted, and then the lithium battery is charged. For an equivalent circuit diagram, reference may be made to FIG. 5.

In the present embodiment, when the battery cell supplies power and if the voltage of the battery cell is greater than a voltage of a first battery connected in parallel to the switching control circuit, the first switch device is turned on, the second switch device is not turned on, the third switch device, the fourth switch device and the inductor constitute a buck power supply circuit, and the buck power supply circuit bucks the voltage to supply power to a load. When the battery cell supplies power and if the voltage of the battery cell is less than the voltage of the first battery connected in parallel to the switching control circuit, the third switch device is turned on, the fourth switch device is not turned on, the first switch device, the second switch device and the inductor constitute a boost power supply circuit, and the boost power supply circuit boosts the voltage to supply power to the load.

Two cases exist when the battery cell in the switching control circuit supplies power: (1) the voltage V_{Li} of the lithium battery > a voltage V of an external battery cell; and (2) the voltage V_{Li} of the lithium battery < the voltage V of the external battery cell, where Vₒᵤₜ denotes the voltage of the busbar and V_{Li} denotes the voltage of the lithium battery.

In case (1), VT1 is turned on, VT2 is not turned on, and L, VT3 and VT4 constitute the buck power supply circuit. At this time, the voltage of the lithium battery is bucked for power supply to the load. For an equivalent circuit diagram, reference may be made to FIG. 6.

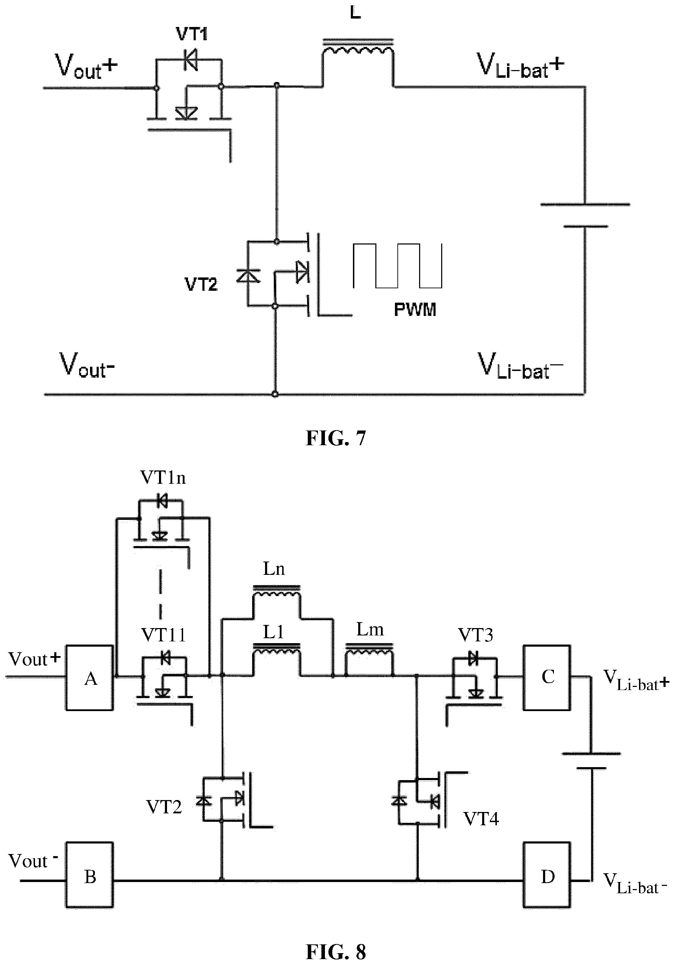

In case (2), VT3 is turned on, VT4 is not turned on, and VT1, VT2 and L constitute the boost power supply circuit. At this time, the voltage of the lithium battery is boosted for the power supply to the load. For an equivalent circuit diagram, reference may be made to FIG. 7.

In some embodiments, the first-stage circuit includes at least one first switch device. When the number of first switch devices is greater than or equal to 2, all the first switch devices are configured in the forward mode and connected in parallel. For a circuit diagram, reference may be made to FIG. 8.

In some embodiments, the second-stage circuit includes at least one inductor. When the number of inductors is 2, two inductors are connected in series. When the number of inductors is greater than 2, two inductors are selected and connected in series, and each inductor among inductors excluding the two inductors connected in series is connected in parallel to any one of the two inductors connected in series. For a circuit diagram, reference may be made to FIG. 8. In the embodiments of the present application, the inductor is configured into a circuit combination for the voltage to be boosted and bucked. Moreover, the inductor further has functions of rectification and filtering so that the battery cell can be protected.

In some embodiments, to improve the expansibility and maintainability of the switching control circuit, extension interfaces are configured at different nodes of the switching control circuit to facilitate the access of an external device, the replacement of the switching control circuit and the replacement of an internal component of the switching control circuit. The present embodiment provides an example in which some extension interfaces are configured. The switching control circuit further includes at least one of: a first extension interface, a second extension interface, or at least one of a third extension interface or a fourth extension interface. Where the positive electrode of the busbar is connected to the first-stage circuit through the first extension interface, the switching control circuit is connected to the negative electrode of the busbar through the second extension interface, and at least one of the third extension interface or the fourth extension interface is connected in one-to-one correspondence to at least one of the positive electrode or the negative electrode of the battery cell in the third-stage circuit. For a circuit diagram, reference may be made to FIG. 8. In FIG. 8, extension interfaces A and B are configured at the positive electrode and the negative electrode of the busbar (Vₒᵤₜ), respectively. Where the extension interface A corresponds to the first extension interface, and the extension interface B corresponds to the second extension interface. Extension interfaces C and D are configured at two ends of the lithium battery, respectively. Where the extension interface C corresponds to the third extension interface, and the extension interface D corresponds to the fourth extension interface. It is to be noted that, in the present embodiment, a set position where the extension interface is disposed and the number of the configured extension interfaces are not limited. The extension interface may be configured at any position of the switching control circuit, at least one extension interface may be configured, and of course, no extension interface may be configured. An interface type of the configured extension interface is also not limited, and the interface type may be changed correspondingly according to an interface function and a function of an extension module that needs to be connected to the extension interface.

In some embodiments, since the position where the extension interface is disposed, the number of the configured extension interfaces in the switching control circuit as well as the interface function and the interface type may be changed according to specific situations. For ease of understanding and description, several devices that can be connected to the extension interface are provided for reference. The device includes any one of a fuse, a relay, a metal-oxide-semiconductor field-effect transistor (MOSFET), a switch and an additional function circuit.

In some embodiments, each of the first switch device, the second switch device, the third switch device and the fourth switch device includes any one of an MOSFET and an insulated-gate bipolar transistor (IGBT).

The present embodiment provides the switching control circuit. The switching control circuit includes the first-stage circuit, the second-stage circuit and the third-stage circuit, which are sequentially connected in parallel. The first-stage circuit includes the first switch device and the second switch device, where the first switch device is connected to the positive electrode of the busbar, the second switch device is connected to the negative electrode of the busbar, the first switch device and the second switch device are connected in sequence and are configured in a forward mode, and the forward mode is the configuration mode in which the first switch device and the second switch device function as the switches when the potential of the positive electrode of the busbar is higher than the potential of the negative electrode of the busbar. The second-stage circuit includes the inductor and the fourth switch device, where the inductor is drawn from between the first switch device and the second switch device, the fourth switch device is connected to the negative electrode of the busbar, the inductor and the fourth switch device are connected in sequence, and the fourth switch device is configured in the forward mode. The third-stage circuit includes the third switch device and the battery cell, where the third switch device is drawn from between the inductor and the fourth switch device, the negative electrode of the battery cell is connected to the negative electrode of the busbar, the third switch device is connected to the positive electrode of the battery cell, and the third switch device is configured in a reverse mode. The first-stage circuit, the second-stage circuit and the third-stage circuit are disposed in the present embodiment. The three stages of circuits are combined to separately constitute the buck charging circuit, the boost charging circuit, the buck power supply circuit and the boost power supply circuit so that a voltage buck and boost is controlled for the battery cell. Therefore, when the switching control circuit is connected in parallel to an external battery to constitute a battery pack, battery packs are matched and controlled more stably and accurately, improving the safety and stability of the battery pack and extending a service life of the battery pack.

### Embodiment two

The present embodiment provides a switching control circuit integration apparatus. The switching control circuit integration apparatus includes at least one switching control circuit, where each of the at least one switching control circuit is the switching control circuit according to embodiment one. When the number of the switching control circuits is greater than or equal to 2, the switching control circuits are connected in parallel to each other.

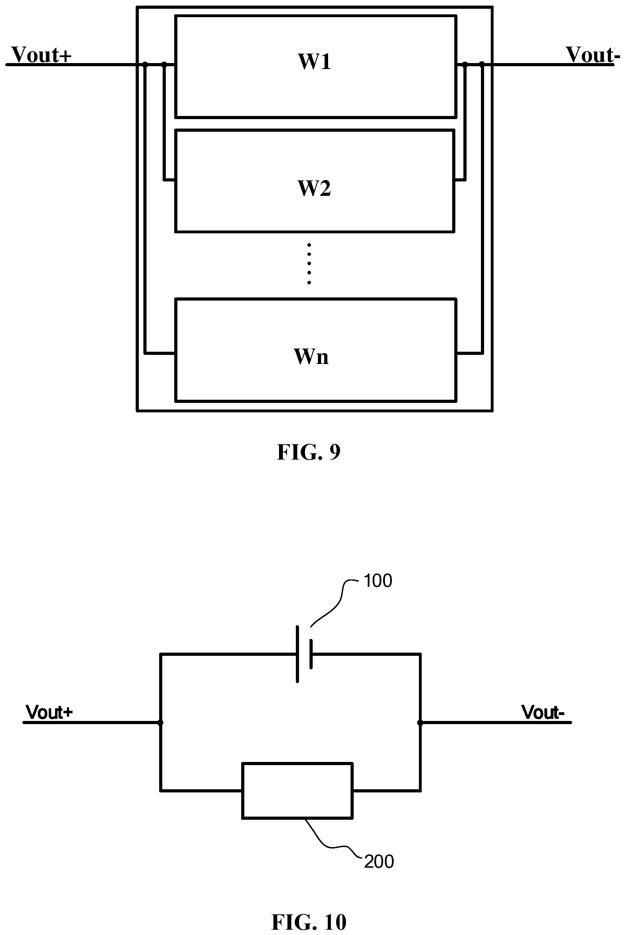

Referring to FIG. 9, FIG. 9 shows the switching control circuit integration apparatus according to the present embodiment, the switching control circuit integration apparatus includes multiple switching control circuits W1, W2, ... and Wn. The switching control circuit W includes, but is not limited to, the switching control circuit according to embodiment one. It can be seen from FIG. 9 that the switching control circuits W in the switching control circuit integration apparatus are connected in parallel to each other.

The present embodiment provides the switching control circuit integration apparatus including the at least one switching control circuit connected in parallel. The switching control circuit integration apparatus consists of the at least one switching control circuit connected in parallel so that the switching control circuit is extended, achieving a more flexible combination relationship. Moreover, multiple switching control circuits connected in parallel can improve an input current and an output current of the switching control circuit integration apparatus so that the switching control circuit integration apparatus can work at a large current, expanding an application range of the switching control circuit integration apparatus and reducing a usage cost.

### Embodiment three

The present embodiment provides a multiple-battery switching control circuit. The multiple-battery switching control circuit includes a first battery cell and a switching control circuit integration apparatus containing at least one battery cell, where the first battery cell and the switching control circuit integration apparatus are connected in parallel and then connected to a positive electrode and a negative electrode of a busbar in a same-electrode connection manner. Referring to FIG. 10, FIG. 10 is a structural diagram of the multiple-battery switching control circuit according to the present embodiment. In FIG. 10, the multiple-battery switching control circuit includes a first battery cell 100 and a switching control circuit integration apparatus 200. When the multiple-battery switching control circuit provided by the present embodiment is applied to a current communication device, the first battery cell 100 generally refers to an original battery cell in the communication device, including, but not limited to, a lead-acid battery. The lead-acid battery is widely used in a relatively old communication device. However, at present, as 5G technology starts to develop, the lead-acid battery currently equipped cannot satisfy a requirement of the device for power consumption. In this case, a battery pack with better performance is connected in parallel to the original lead-acid battery as a supplement to the original lead-acid battery, so as to satisfy the requirement of the communication device for electrical energy.

In the present embodiment, the switching control circuit integration apparatus 200 includes, but is not limited to, the switching control circuit integration apparatus according to embodiment two. Since the switching control circuit integration apparatus in embodiment two consists of the switching control circuit in embodiment one, the switching control circuit integration apparatus 200 includes at least one battery cell, and the at least one battery cell are connected in parallel to the first battery cell 100. Moreover, since the switching control circuit integration apparatus 200 may include multiple switching control circuits connected in parallel, the magnitudes of an input current and an output current can be adjusted. When the switching control circuit integration apparatus 200 is used in the current communication device, the current relatively old lead-acid battery can be gradually replaced, and more convenience is provided for a later function extension of the device.

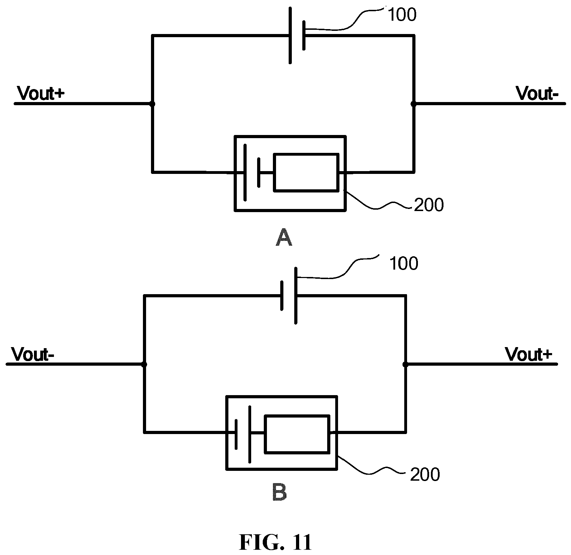

It is to be noted that, in the present embodiment, a polarity of the first battery cell and a polarity of the switching control circuit integration apparatus are the same as a polarity of the busbar. That is, a positive electrode of the first battery cell is connected to the positive electrode of the busbar, a positive electrode of the switching control circuit integration apparatus is connected to the positive electrode of the busbar, a negative electrode of the first battery cell is connected to the negative electrode of the busbar, and a negative electrode of the switching control circuit integration apparatus is connected to the negative electrode of the busbar. Moreover, it is also to be noted that, although the polarity of the first battery cell and the polarity of the switching control circuit integration apparatus are the same as the polarity of the busbar in the present embodiment, two cases exist for a position where the battery cell in the switching control circuit integration apparatus is disposed. In a first case, when the positive electrode of the busbar is configured at a left side and the negative electrode of the busbar is configured at a right side, a current from the positive electrode flows through the battery cell and then through other parts of the switching control circuit. In a second case, when the positive electrode of the busbar is configured at the right side and the negative electrode of the busbar is configured at the left side, the current from the positive electrode flows through other parts of the switching control circuit and then through the battery cell. Referring to FIG. 11, FIG. 11 is a structural diagram of the multiple-battery switching control circuit in the case of different polarities of the busbar according to the present embodiment.

FIG. 11A corresponds to the first case and FIG. 11B corresponds to the second case.

In some other embodiments, a type of the first battery cell in the multiple-battery switching control circuit and a type of the battery cell in the switching control circuit integration apparatus are not limited, where the same type of battery cell or different types of battery cell may be used.

The present embodiment provides the multiple-battery switching control circuit, which consists of the first battery cell and the switching control circuit integration apparatus connected in parallel. In the present embodiment, the first battery cell is generally a battery originally equipped in the device, and the switching control circuit integration apparatus is connected in parallel on the basis of the original battery to extend the battery pack, so as to output a larger battery current. Moreover, since the switching control circuit integration apparatus consists of the at least one switching control circuit connected in parallel, the switching control circuit integration apparatus can control the input current, the output current and a voltage so that the switching control circuit integration apparatus connected in parallel cooperates with the original first battery cell better and the stability and reliability of the battery pack consisting of the multiple-battery switching control circuit are significantly improved.

### Embodiment four

The present embodiment provides a multiple-battery switching control system. The multiple-battery switching control system includes a communication power supply, a multiple-battery switching control circuit and a load, where the communication power supply is separately connected to the multiple-battery switching control circuit and the load, the multiple-battery switching control circuit is connected to the load, a busbar is separately connected to the communication power supply, the multiple-battery switching control circuit and the load in the multiple-battery switching control system, the communication power supply is configured to control a current and a voltage output by the busbar, control charging and discharging of the multiple-battery switching control circuit and monitor the multiple-battery switching control system, and the multiple-battery switching control circuit is configured to store electrical energy and provide the electrical energy to the load.

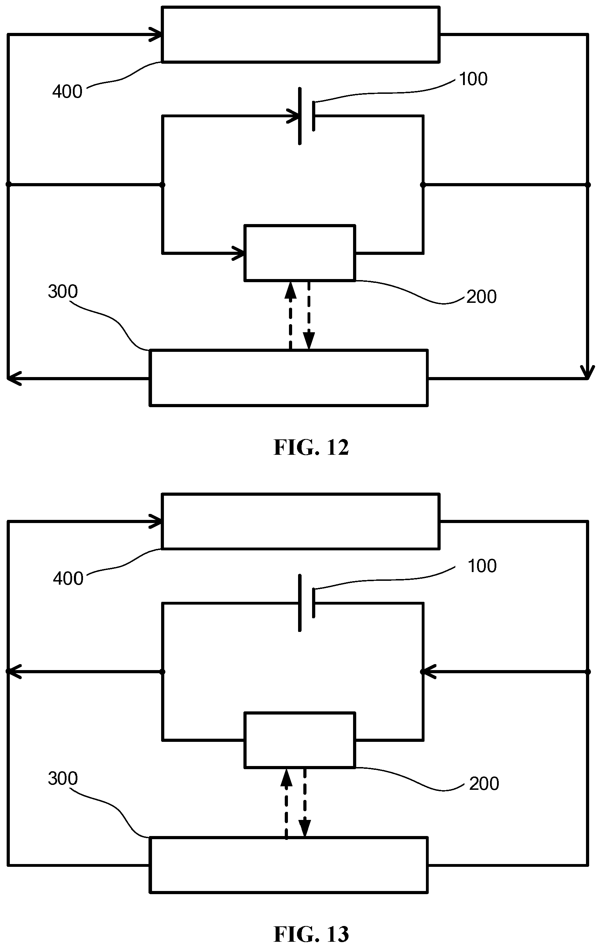

Referring to FIGS. 12 and 13, in practical application, the multiple-battery switching control system in the present embodiment includes two operation cases, where FIG. 12 is a diagram showing the multiple-battery switching control system where an external busbar supplies power according to the present embodiment, and FIG. 13 is a diagram showing the multiple-battery switching control system when a battery supplies power according to the present embodiment. In FIGS. 12 and 13, a first battery cell 100, a switching control circuit integration apparatus 200, a communication power supply 300 and a load 400 are included, where an arrow symbol represents a flowing direction of a current, the first battery cell 100 and the switching control circuit integration apparatus 200 form the multiple-battery switching control circuit, and a communication connection is between the switching control circuit integration apparatus 200 and the communication power supply 300.

In FIG. 12, when the communication power supply supplies an alternating current and the busbar outputs a direct current voltage, the communication power supply 300 detects current data and voltage data, preferentially delivers the current to the load 400 for use and delivers an excess current to the first battery cell 100 and the switching control circuit integration apparatus 200 at the same time to charge the first battery cell 100 and the switching control circuit integration apparatus 200.

In FIG. 13, when the communication power supply stops supplying the alternating current and the busbar has a voltage dip, the first battery cell 100 and the switching control circuit integration apparatus 200 start to supply power to the load. At the same time, the communication power supply 300 controls a current value and a voltage value of the switching control circuit integration apparatus 200, thereby controlling a power supply ratio of the first battery cell 100 and the switching control circuit integration apparatus 200.

The present embodiment provides the multiple-battery switching control system. The multiple-battery switching control system includes the communication power supply, the multiple-battery switching control circuit and the load, where a positive electrode of the communication power supply is connected to a positive electrode of the busbar, a negative electrode of the communication power supply is connected to a negative electrode of the busbar, the communication power supply is configured to control the busbar to transmit electrical energy to the multiple-battery switching control circuit and the load and control the charging and discharging of the multiple-battery switching control circuit, and the multiple-battery switching control circuit is configured to store the electrical energy and provide the electrical energy to the load. The communication power supply detects a voltage and a current of the busbar to determine whether the alternating current exists and controls the multiple-battery switching control circuit to be charged and supply power, thereby ensuring normal power consumption of the load.

### Embodiment five

The present embodiment provides a multiple-battery switching control method. A multiple-battery switching control system includes a communication power supply, a multiple-battery switching control circuit and a load, where the communication power supply is separately connected to the multiple-battery switching control circuit and the load, and the multiple-battery switching control circuit is connected to the load. The multiple-battery switching control method includes the following: when the communication power supply supplies an alternating current and a busbar outputs a direct current voltage, the communication power supply controls the load to be powered and the multiple-battery switching control circuit to be charged; and when the communication power supply stops supplying the alternating current and the busbar has a voltage dip, the communication power supply controls a power storage apparatus to supply power to the load, where the power storage apparatus includes, but is not limited to, a battery.

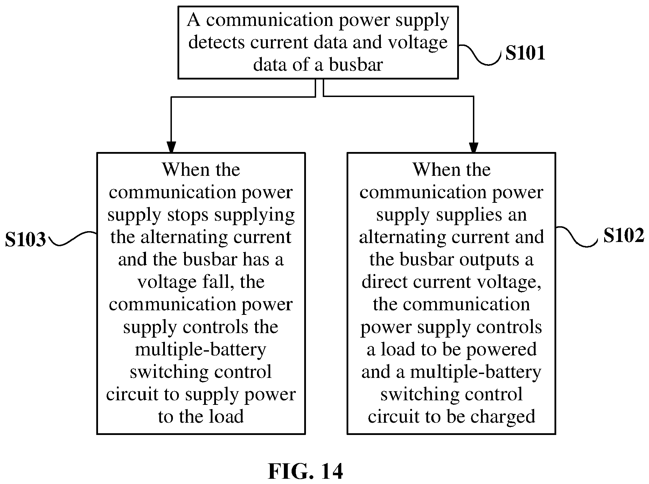

The multiple-battery switching control method in the present embodiment mainly includes two cases. In a first case, when the communication power supply supplies the alternating current and the busbar outputs the direct current voltage, a direct current of the busbar supplies power to the load and charges batteries in the multiple-battery switching control circuit at a preset ratio at the same time. In a second case, when the communication power supply stops supplying the alternating current and the busbar has the voltage dip, the batteries in the multiple-battery switching control circuit need to supply power to the load. Referring to FIG. 14, FIG. 14 is a flowchart of the multiple-battery switching control method according to the present embodiment. The method includes S101 to S103.

In S101, the communication power supply detects current data and voltage data of the busbar.

In S102, when the communication power supply supplies the alternating current and the busbar outputs the direct current voltage, the communication power supply controls the load to be powered and the multiple-battery switching control circuit to be charged.

In S103, when the communication power supply stops supplying the alternating current and the busbar has the voltage dip, the communication power supply controls the multiple-battery switching control circuit to supply power to the load.

In the embodiments of the present application, the communication power supply is a main control unit of a communication device. A function of the communication power supply includes, but is not limited to, monitoring and adjusting the current and the voltage of the busbar, controlling, according to the current data and the voltage data of the busbar, the multiple-battery switching control circuit to be charged and supply power and controlling a power supply current of the load. In the present embodiment, when the communication power supply supplies the alternating current and the busbar outputs the direct current voltage, that the communication power supply controls the load to be powered and the multiple-battery switching control circuit to be charged includes the following: when the communication power supply supplies the alternating current and the busbar outputs the direct current voltage, the communication power supply controls the load to be powered at a maximum power supply current of the load and the multiple-battery switching control circuit to be charged at a current except the maximum power supply current of the load, where the current except the maximum power supply current of the load is less than or equal to a maximum current allowed by the multiple-battery switching control circuit.

Data on a maximum current required by the load and data on a maximum current allowed to pass through the multiple-battery switching control circuit are stored in the communication power supply. When the communication power supply supplies the alternating current and the busbar outputs the direct current voltage, the communication power supply generally controls a current to supply power to the load firstly. In some other embodiments, a magnitude of the current data of the busbar is determined. When the current of the busbar cannot satisfy a power supply requirement of the load, the multiple-battery switching control circuit may be controlled to supplement electrical energy to the load so that the load can be in a normal operation state. When the current of the busbar satisfies the power supply requirement of the load, the load is powered, and excess electrical energy is transmitted to the multiple-battery switching control circuit for charging at the same time.

In the present embodiment, the multiple-battery switching control circuit includes a first battery cell and a switching control circuit integration apparatus containing at least one battery cell and connected in parallel to the first battery cell. The method further includes the following: when the multiple-battery switching control circuit is charged, the communication power supply controls, according to a preset charging rule, at least one of the first battery cell or the switching control circuit integration apparatus to be charged.

When the multiple-battery switching control circuit supplies power, the communication power supply controls, according to a preset power supply rule, at least one of the first battery cell or the switching control circuit integration apparatus to supply power to the load.

In the present embodiment, the preset charging rule includes the following: when the switching control circuit integration apparatus is preferentially charged, the communication power supply controls a voltage input to the multiple-battery switching control system by the busbar to be the same as a voltage of the first battery cell, where if the voltage input to the multiple-battery switching control system by the busbar is greater than a voltage of the at least one battery cell in the switching control circuit integration apparatus, the switching control circuit integration apparatus bucks the voltage to charge the at least one battery cell; if the voltage input to the multiple-battery switching control system by the busbar is less than the voltage of the at least one battery cell in the switching control circuit integration apparatus, the switching control circuit integration apparatus boosts the voltage to charge the at least one battery cell; when the first battery cell is preferentially charged, the switching control circuit integration apparatus charges the at least one battery cell in the switching control circuit integration apparatus according to the voltage input to the multiple-battery switching control system by the busbar and the voltage of the at least one battery cell; when the first battery cell and the switching control circuit integration apparatus needs to be charged at a current ratio of 11:12, the switching control circuit integration apparatus is controlled to be charged at 12, and the first battery cell is controlled to be charged at 11, where 11 denotes a remaining current of a current input to the multiple-battery switching control system by the busbar except 12.

In the present embodiment, the preset power supply rule includes the following: when the switching control circuit integration apparatus preferentially supplies power, a power supply voltage of the switching control circuit integration apparatus is controlled to be the same as the voltage of the first battery cell, where the first battery cell stops supplying power and being charged, and controlling the switching control circuit integration apparatus to supply power includes boost power supply and buck power supply; when the first battery cell preferentially supplies power, the switching control circuit integration apparatus is controlled to turn off; and when the load is powered at a current ratio of 13:14, the switching control circuit integration apparatus is controlled to supply power to the load at 14 of a current required by the load, and the first battery cell is controlled to supply power to the load at a remaining current 13 of the current required by the load except 14.

The above multiple-battery switching control circuit includes, but is not limited to, the circuits and apparatuses in embodiments one to five. The first battery cell is generally an original battery cell in the communication device, and the multiple-battery switching control circuit is a supplementary battery cell connected for extension. A capacity of a general battery cell in the connected supplementary battery is not as large as that of the original battery cell, but the performance and the number of cycles of the supplementary battery are apparently better than those of the original battery. Therefore, to make better use of the batteries on two lines, the charging and power supply of the batteries need to be adjusted and controlled properly.

The present embodiment provides the multiple-battery switching control method. That the communication power supply monitors and controls the charging and power supply of the multiple-battery switching control circuit includes the following: when the communication power supply supplies the alternating current and the busbar outputs the direct current voltage, the communication power supply controls the load to be powered and the multiple-battery switching control circuit to be charged; and when the communication power supply stops supplying the alternating current and the busbar has the voltage dip, the communication power supply controls the multiple-battery switching control circuit to supply power to the load. The current situation of the busbar is monitored by the communication power supply so that the load is powered and the multiple-battery switching control circuit is charged at the same time. When the busbar has no current, the multiple-battery switching control circuit is controlled to supply power to the load so that the load can be supplied with electrical energy in any case, thereby ensuring the normal operation of the load.

Moreover, in the present embodiment, the multiple-battery switching control circuit consists of the first battery cell and the switching control circuit integration apparatus connected in parallel. The switching control circuit integration apparatus includes the at least one battery cell. Through the control of the communication power supply, multiple battery cells in the multiple-battery switching control circuit are better matched and adjusted so that the usage efficiency, lifetime and stability of the battery are improved.

### Embodiment six

A scheme of the present application is described below through a specific example. In the present embodiment, a bidirectional direct current (DC)-DC power transformation unit corresponds to the switching control circuit of the present application, a lead-acid battery corresponds to the first battery cell, and a lithium battery corresponds to the battery cell. Preset initial conditions include a current of 300 A output by a busbar, 600 AH configured for the lead-acid battery, 100 AH configured for the lithium battery and a maximum current of 90 A of a load. 1. The lead-acid battery and the lithium battery are proportionally charged.

In step 1, when an alternating current is supplied, a communication power supply supplies power to the load and charges the lead-acid battery and the lithium battery. A total current output by the communication power supply is 300 A, the maximum current of the load is 90 A, and a maximum charge current that can be supplied to the lead-acid battery and the lithium battery is the output current minus the load current, that is, the maximum charge current is 210 A.

In step 2, the communication power supply directly charges the lead-acid battery, that is, the lead-acid battery is charged at a maximum current of 120 A (0.2 C, that is, a rate of 0.2 of the capacity of 600 AH of the lead-acid battery).

In step 3, the communication power supply monitors and calculates a maximum current allowed by the lithium battery: 210 A - 120 A = 90 A.

In step 4, the lithium battery obtains a maximum allowable charge current of 90 A.
(1) If Vₒᵤₜ > V_{Li}, in FIG. 3, VT3 is turned on, VT4 is not turned on, VT1/VT2/L form a buck circuit (for an equivalent diagram, reference may be made to FIG. 4), and the bidirectional DC-DC power transformation unit may charge the lithium battery by using the buck circuit. Where Vₒᵤₜ denotes a voltage of the busbar and V_{Li} denotes a voltage of the lithium battery. VT1 is controlled to be turned on or off through pulse-width modulation (PWM) so that the voltage is bucked, and the lithium battery is charged at a limited current of 90 A.
(2) If Vₒᵤₜ < V_{Li}, in FIG. 3, VT1 is turned on, VT2 is not turned on, VT3/VT4 form a boost circuit (for an equivalent diagram, reference may be made to FIG. 5), and the bidirectional DC-DC power transformation unit may charge the lithium battery at 90 A by using the boost circuit.

In step 5, the communication power supply may dynamically adjust a charge ratio of the lead-acid battery to the lithium battery. 2. During discharging when the lead-acid battery and the lithium battery are mixed in use, the lead-acid battery and the lithium battery are discharged proportionally.

In step 1, when the alternating current is not supplied, both the lead-acid battery and the lithium battery instantaneously supply power to the load, and the lithium battery supplies power to the load according to a maximum output.

In step 2, the communication power supply calculates the load current as the total current of 90 A. In step 3, the communication power supply requires the lithium battery to be discharged at 60 A and the lead-acid battery to be discharged at 30 A and delivers a discharge current required by the lithium battery to the lithium battery.

In step 4, the lithium battery receives a signal, where the discharge current is 60 A.
(1) If V_{Li} > V_{Pb}, the lithium battery is bucked and discharged through a buck in FIG. 6, the voltage is adjusted, a constant current of 60 A is output, and a remaining current required by the load is supplied by the lead-acid battery.
(2) If V_{Li} < V_{Pb}, the lithium battery is boosted and discharged through a boost in FIG. 7, the voltage is adjusted, a constant current of 60 A is output, and the remaining current required by the load is supplied by the lead-acid battery.

In step 5, the communication power supply may dynamically adjust a discharge ratio of the lead-acid battery to the lithium battery.

It can be seen that it is to be understood by those skilled in the art that some or all steps of the preceding method and function modules/units in the preceding system or apparatus may be implemented as software (which may be implemented by computer program codes executable by a computing device), firmware, hardware and suitable combinations thereof. In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits.

Additionally, as is known to those having ordinary skill in the art, communication media generally include computer-readable instructions, data structures, computer program modules or other data in carriers or in modulated data signals transported in other transport mechanisms and may include any information delivery medium. Therefore, the present application is not limited to any specific combination of hardware and software.

Embodiments of the present application provide the multiple-battery switching control circuit, apparatus and system and the multiple-battery switching control method. The switching control circuit is designed, which includes the first-stage circuit, the second-stage circuit and the third-stage circuit, which are sequentially connected in parallel. The first-stage circuit includes the first switch device and the second switch device, where the first switch device is connected to the positive electrode of the busbar, the second switch device is connected to the negative electrode of the busbar, the first switch device and the second switch device are connected in sequence and are configured in a forward mode, and the forward mode is the manner of disposing the first switch device and the second switch device in which the first switch device and the second switch device function as the switches when the potential of the positive electrode of the busbar is higher than the potential of the negative electrode of the busbar. The second-stage circuit includes the inductor and the fourth switch device, where the inductor is drawn from between the first switch device and the second switch device, the fourth switch device is connected to the negative electrode of the busbar, the inductor and the fourth switch device are connected in sequence, and the fourth switch device is configured in the forward mode. The third-stage circuit includes the third switch device and the battery cell, where the third switch device is drawn from between the inductor and the fourth switch device, the negative electrode of the battery cell is connected to the negative electrode of the busbar, the third switch device is connected to the positive electrode of the battery cell, and the third switch device is configured in a reverse mode. The switch devices in the switching control circuit cooperate so that the battery cell is charged and discharged in different cases. Moreover, the switching control circuit and the first battery cell are connected in parallel, and the battery cell in the switching control circuit is adjusted so that the battery cell cooperates with the first battery cell more stably and reliably, improving the power consumption requirement and power consumption safety of the communication device and reducing the modification cost by a direct connection in parallel.

## Claims

1. A switching control circuit, comprising a first-stage circuit, a second-stage circuit and a third-stage circuit, which are sequentially connected in parallel; wherein
the first-stage circuit comprises a first switch device and a second switch device, wherein the first switch device is connected to a positive electrode of a busbar, the second switch device is connected to a negative electrode of the busbar, the first switch device and the second switch device are connected in sequence and are configured in a forward mode, and the forward mode is a configuration mode in which the first switch device and the second switch device function as switches in a case where a potential of the positive electrode of the busbar is higher than a potential of the negative electrode of the busbar;
the second-stage circuit comprises an inductor and a fourth switch device, wherein the inductor is drawn from between the first switch device and the second switch device, the fourth switch device is connected to the negative electrode of the busbar, the inductor and the fourth switch device are connected in sequence, and the fourth switch device is configured in the forward mode; and
the third-stage circuit comprises a third switch device and a battery cell, wherein the third switch device is drawn from between the inductor and the fourth switch device, a negative electrode of the battery cell is connected to the negative electrode of the busbar, the third switch device is connected to a positive electrode of the battery cell, and the third switch device is configured in a reverse mode.

2. The circuit according to claim 1, wherein the first-stage circuit comprises at least one first switch device; and
in a case where a number of first switch devices is greater than or equal to 2, all the first switch devices are configured in the forward mode and connected in parallel.

3. The circuit according to claim 1, wherein the second-stage circuit comprises at least one inductor;
in a case where a number of inductors is 2, two inductors are connected in series; and
in a case where the number of inductors is greater than 2, two inductors are selected and connected in series, and each inductor among inductors excluding the two inductors connected in series is connected in parallel to one of the two inductors connected in series.

4. The circuit according to any one of claims 1 to 3, wherein
when the battery cell is charged and in a case where a voltage input to the switching control circuit by the busbar is greater than a voltage of the battery cell, the third switch device is turned on, the fourth switch device is not turned on, the first switch device, the second switch device and the inductor constitute a buck charging circuit, and the buck charging circuit bucks the voltage to charge the battery cell; and
when the battery cell is charged and in a case where the voltage input to the switching control circuit by the busbar is less than the voltage of the battery cell, the first switch device is turned on, the second switch device is not turned on, the third switch device, the fourth switch device and the inductor constitute a boost charging circuit, and the boost charging circuit boosts the voltage to charge the battery cell.

5. The circuit according to any one of claims 1 to 3, wherein
when the battery cell supplies power and in a case where a voltage of the battery cell is greater than a voltage of a first battery connected in parallel to the switching control circuit, the first switch device is turned on, the second switch device is not turned on, the third switch device, the fourth switch device and the inductor constitute a buck power supply circuit, and the buck power supply circuit bucks the voltage to supply power to a load; and
when the battery cell supplies power and in a case where the voltage of the battery cell is less than the voltage of the first battery connected in parallel to the switching control circuit, the third switch device is turned on, the fourth switch device is not turned on, the first switch device, the second switch device and the inductor constitute a boost power supply circuit, and the boost power supply circuit boosts the voltage to supply power to the load.

6. The circuit according to any one of claims 1 to 3, wherein each of the first switch device, the second switch device, the third switch device and the fourth switch device comprises one of a metal-oxide-semiconductor field-effect transistor, MOSFET, and an insulated-gate bipolar transistor, IGBT.

7. The circuit according to any one of claims 1 to 3, further comprising at least one of:
a first extension interface, wherein the positive electrode of the busbar is connected to the first-stage circuit through the first extension interface;
a second extension interface, wherein the switching control circuit is connected to the negative electrode of the busbar through the second extension interface; or
at least one of a third extension interface or a fourth extension interface, wherein at least one of the third extension interface or the fourth extension interface is connected in one-to-one correspondence to at least one of the positive electrode or the negative electrode of the battery cell in the third-stage circuit.

8. The circuit according to claim 7, wherein each connectable extension unit in the first extension interface, the second extension interface, the third extension interface and the fourth extension interface comprises any one of a fuse, a relay, a MOSFET, a switch and an additional function circuit.

9. A switching control circuit integration apparatus, comprising at least one switching control circuit, wherein each of the at least one switching control circuit is the switching control circuit according to any one of claims 1 to 8; and
in a case where a number of switching control circuits is greater than or equal to 2, the switching control circuits are connected in parallel to each other.

10. A multiple-battery switching control circuit, comprising a first battery cell and the switching control circuit integration apparatus according to claim 9; wherein
the first battery cell and the switching control circuit integration apparatus are connected in parallel and then connected to a positive electrode and a negative electrode of a busbar in a same-electrode connection manner.

11. The circuit according to claim 10, wherein the first battery cell and a battery cell in the switching control circuit integration apparatus are the same battery cell or different battery cells.

12. A multiple-battery switching control system, comprising a communication power supply, a multiple-battery switching control circuit and a load; wherein
a busbar is connected to the communication power supply in the multiple-battery switching control system, and the communication power supply is configured to: control a current and a voltage output by the busbar, control charging and discharging of the multiple-battery switching control circuit and monitor the multiple-battery switching control system; and
the multiple-battery switching control circuit is configured to store electrical energy and provide the electrical energy to the load.

13. A multiple-battery switching control method, applied to a multiple-battery switching control system, and the multiple-battery switching control system comprising a communication power supply, a multiple-battery switching control circuit and a load; wherein the communication power supply is separately connected to the multiple-battery switching control circuit and the load, the multiple-battery switching control circuit is connected to the load, and the multiple-battery switching control method comprises:
in response to determining that the communication power supply supplies an alternating current and a busbar outputs a direct current voltage, controlling, by the communication power supply, the load to be powered and the multiple-battery switching control circuit to be charged; and
in response to determining that the communication power supply stops supplying the alternating current and the busbar has a voltage dip, controlling, by the communication power supply, the multiple-battery switching control circuit to supply power to the load.

14. The method according to claim 13, wherein in response to determining that the communication power supply supplies the alternating current and the busbar outputs the direct current voltage, controlling, by the communication power supply, the load to be powered and the multiple-battery switching control circuit to be charged comprises: in response to determining that the communication power supply supplies the alternating current and the busbar outputs the direct current voltage, controlling, by the communication power supply, the load to be powered at a maximum power supply current of the load and the multiple-battery switching control circuit to be charged at a current except the maximum power supply current of the load, wherein the current except the maximum power supply current of the load is less than or equal to a maximum current allowed by the multiple-battery switching control circuit.

15. The method according to claim 14, wherein the multiple-battery switching control circuit comprises a first battery cell and a switching control circuit integration apparatus comprising at least one battery cell and connected in parallel to the first battery cell; and
the method further comprises:
in response to charging the multiple-battery switching control circuit, controlling, by the communication power supply according to a preset charging rule, at least one of the first battery cell or the switching control circuit integration apparatus to be charged; and
in response to the multiple-battery switching control circuit supplying power to the load, controlling, by the communication power supply according to a preset power supply rule, at least one of the first battery cell or the switching control circuit integration apparatus to supply power to the load.

16. The method according to claim 15, wherein the preset charging rule comprises:
in a case where the switching control circuit integration apparatus is preferentially charged, controlling, by the communication power supply, a voltage input to the multiple-battery switching control system by the busbar to be the same as a voltage of the first battery cell, wherein in a case where the voltage input to the multiple-battery switching control system by the busbar is greater than a voltage of the at least one battery cell in the switching control circuit integration apparatus, the switching control circuit integration apparatus bucks the voltage to charge the at least one battery cell; and in a case where the voltage input to the multiple-battery switching control system by the busbar is less than the voltage of the at least one battery cell in the switching control circuit integration apparatus, the switching control circuit integration apparatus boosts the voltage to charge the at least one battery cell;
in a case where the first battery cell is preferentially charged, charging, by the switching control circuit integration apparatus, the at least one battery cell in the switching control circuit integration apparatus according to the voltage input to the multiple-battery switching control system by the busbar and the voltage of the at least one battery cell; and
in a case where the first battery cell and the switching control circuit integration apparatus are charged at a current ratio of I1:I2, controlling the switching control circuit integration apparatus to be charged at 12 and the first battery cell to be charged at 11, wherein 11 denotes a remaining current of a current input to the multiple-battery switching control system by the busbar except 12.

17. The method according to claim 15, wherein the preset power supply rule comprises:
in a case where the switching control circuit integration apparatus preferentially supplies power, controlling a power supply voltage of the switching control circuit integration apparatus to be the same as a voltage of the first battery cell, wherein the first battery cell stops supplying power and being charged, and controlling the switching control circuit integration apparatus to supply power comprises boost power supply and buck power supply;
in a case where the first battery cell preferentially supplies power, controlling the switching control circuit integration apparatus to turn off; and
in a case where the load is powered at a current ratio of I3:I4, controlling the switching control circuit integration apparatus to supply power to the load at 14 and the first battery cell to supply power to the load at a remaining current 13 of a current required by the load except 14.
